# FASCICULE DE BREVET EUROPEEN

(11) **EP 1 275 862 B1**
(45) Date de publication et mention de la délivrance du brevet: **21.09.2005**
(21) Numéro de dépôt: 02291656.3
(22) Date de dépôt: 03.07.2002
(51) Int. Cl.: F16C 13/00

(54) **Pièce pourvue de moyens d'immobilisation angulaire, et ensemble mécanique associé**
Werkstück mit Winkelfixierung und zugehörige mechanische Vorrichtung
Component with angular fixing means and associated mechanical device

(30) Priorité: 11.07.2001 FR 0109193
(43) Date de publication de la demande: 15.01.2003
(73) Titulaire: Aktiebolaget SKF, 415 50 Göteborg (SE)
(72) Inventeur: Peroz, Philippe, 10060 Torino (IT)
(74) Mandataire: Casalonga, Axel

(56) Documents cités:
- FR-A- 2 605 070
- US-A- 5 468 070

## Description

La présente invention concerne une pièce pourvue de moyens d'immobilisation angulaire, et des ensembles mécaniques associés.

Un galet à roulement comprend en général un roulement muni d'une bague non tournante, une bague tournante, au moins une rangée d'éléments tournants disposés entre des chemins de roulement des bagues tournante et non tournante. La bague non tournante est solidaire d'un support. Un galet est fixé sur la bague tournante, en étant solidaire angulairement de la bague tournante. Le galet peut être réalisé en tôle emboutie, puis emmanché à force sur la bague tournante, ou peut être réalisé par surmoulage d'une matière synthétique sur la bague tournante.

Cependant, la bague tournante et le galet sont obtenus à partir de matériaux possédant des coefficients de dilatation différents. Par exemple, la bague tournante est réalisée en acier, alors que le galet est réalisé en résine de synthèse telle qu'un polyamide.

En fonctionnement, et selon l'environnement dans lequel le galet à roulement est utilisé, par exemple le bloc moteur d'un véhicule automobile, le galet à roulement peut subir une élévation de température importante. Les dilatations différentielles peuvent modifier l'ajustement entre le galet et la bague tournante de façon telle que le galet glisse par rapport à la bague tournante. Le glissement peut également être favorisé par des vibrations importantes auxquelles est soumis le galet à roulement.

On connaît par le document FR -A- 2 605 070 un galet à roulement dont une bague extérieure tournante comprend sur sa surface extérieure des rainures ou cannelures s'étendant axialement jusqu'à des surfaces frontales de la bague extérieure. Le galet, surmoulé sur la bague extérieure, vient en saillie dans les rainures de la bague tournante pour réaliser une solidarisation angulaire.

Cependant, les rainures sont obtenues par un usinage supplémentaire qui augmente le coût de fabrication de la bague tournante.

On connaît par le document EP -A- 0 972 958 un galet à roulement dont la surface extérieure de la bague extérieure tournante est pourvue d'une rainure annulaire excentrée par rapport à la bague tournante. Un galet est surmoulé sur la surface extérieure de la bague tournante en venant en saillie dans la rainure excentrée.

Néanmoins, la réalisation d'une rainure excentrée sur la surface extérieure de la bague tournante se fait par un enlèvement de matière important. La rainure excentrée possède une portion de profondeur maximale diamétralement opposée à une portion de profondeur minimale. Cette dissymétrie radiale peut engendrer un balourd qui provoque des vibrations indésirables générées par le galet à roulement. La rainure excentrée est obtenue par une opération d'usinage supplémentaire qui augmente le coût de fabrication de la bague tournante.

Le document US-A-5 468 070 décrit aussi une autre pièce selon l'état de la technique.

La présente invention concerne une pièce munie d'une surface de révolution prévue pour un contact avec une autre pièce et pouvant être solidarisée angulairement avec cette autre pièce sans nécessiter d'usinage supplémentaire.

La présente invention concerne également une pièce munie d'une surface de révolution prévue pour un contact avec une autre pièce et pouvant être solidarisée angulairement avec cette autre pièce en obtenant une pièce équilibrée, dépourvue de balourd.

Selon l'invention, la pièce comprend une surface de révolution selon un premier axe, ladite surface de révolution étant prolongée à une extrémité axiale par un chanfrein possédant une génératrice formée par une surface de révolution selon un second axe différent du premier axe, pour former un moyen d'immobilisation angulaire lorsque ladite pièce de révolution est en contact avec une autre pièce par ladite surface de révolution et par ledit chanfrein.

Certaines pièces, et notamment les pièces de révolution, possèdent une surface de révolution selon un premier axe et prolongées par un chanfrein destiné à éliminer un angle vif formé entre la surface de révolution et une autre surface de la pièce. Dans le cas d'une pièce de révolution, on réalise en général un chanfrein entre une surface de révolution et une surface latérale de la pièce. La présence du chanfrein facilite l'introduction de la pièce dans un support pour un contact avec la surface de révolution. La formation d'un chanfrein excentré permet d'obtenir un moyen d'immobilisation angulaire avec une seconde pièce sans usinage supplémentaire.

Avantageusement, le second axe est parallèle au premier axe. Cette disposition particulière permet de faciliter la fabrication de la pièce en offrant la possibilité de réaliser par usinage la surface de révolution et le chanfrein sur une même machine.

Dans un mode de réalisation, la pièce comprend un second chanfrein possédant une génératrice formée par une surface de révolution selon un troisième axe de révolution différent des premier et second axes. La présence du second chanfrein permet de mieux assurer l'immobilisation angulaire de la pièce en contact par sa surface de révolution avec une seconde pièce, tout en permettant d'équilibrer la pièce de façon à éliminer un éventuel balourd, notamment dans le cas de pièces de révolution prévues pour être entraînées en rotation.

Avantageusement, les second et troisième axes sont symétriques par rapport au premier axe.

Dans un mode de réailsation, le premier chanfrein prolonge la surface de révolution à partir d'une extrémité axiale de la surface de révolution, le second chanfrein prolongeant la surface de révolution à partir de l'extrémité axiale opposée.

Dans un mode de réalisation, le premier chanfrein prolonge la surface de révolution à partir d'une première extrémité axiale de la surface de révolution, et le second chanfrein prolonge la surface de révolution à partir de la même extrémité axiale.

Dans le cas d'une pièce de révolution, le second chanfrein peut s'étendre entre la surface de révolution et une face latérale de la pièce de révolution ou entre la surface de révolution et une seconde face latérale de la pièce de révolution.

Dans un mode de réalisation, les premier et second chanfreins sont symétriques par rapport à un point du premier axe, pour éviter un balourd.

La surface de révolution formant la génératrice du chanfrein peut posséder des profils variés. Par exemple le chanfrein peut posséder un profil en partie rectiligne, et en partie curviligne, ou à la fois en partie rectiligne et en partie curviligne.

L'invention concerne également un ensemble mécanique comprenant une première pièce comprenant une surface de révolution selon un premier axe de révolution prolongée par un chanfrein possédant une génératrice formée par une surface de révolution selon un second axe de révolution différent du premier axe, et une seconde pièce en contact avec la première pièce par l'intermédiaire de ladite surface de révolution et dudit chanfrein.

L'invention s'applique notamment à un galet à roulement comprenant une bague tournante, une bague non tournante, au moins une rangée d'éléments roulants disposés entre des chemins de roulement des bagues tournante et non tournante, un galet annulaire solidaire angulairement de la bague tournante.

L'invention s'applique également à un ensemble mécanique comprenant une bague non tournante formant la première pièce, une bague tournante, au moins une rangée d'éléments roulants disposés entre des chemins de roulement des bagues tournante et non tournante, et un manchon d'interface formant la seconde pièce, le manchon étant prévu pour être disposé entre la bague non tournante et un support en formant une interface. Le manchon formant interface permet de compenser des variations dimensionnelles entre le support et la bague non tournante, ces variations pouvant apparaître à la suite d'une usure ou d'un échauffement de l'ensemble mécanique. Le manchon d'interface permet également d'absorber des vibrations transmises entre la bague non tournante et le support.

La présente invention et ses avantages seront mieux compris à l'étude de la description détaillée d'un mode de réalisation pris à titre d'exemple et illustrée par les dessins annexés, sur lesquels :
- la figure 1 est une vue en coupe axiale d'un galet à roulement ;
- la figure 2 est une vue en coupe axiale d'un roulement selon la figure 1 ;
- la figure 3 est une vue de face en élévation d'une bague du roulement selon la figure 2 ;
- la figure 4 est une vue en coupe partielle d'un galet ;
- la figure 5 est une vue en coupe partielle d'un second galet ;
- la figure 6 est une vue en coupe partielle d'un troisième galet ; et
- la figure 7 est une vue en coupe d'un ensemble mécanique comprenant un manchon d'interface pour l'adaptation d'un roulement dans un support.

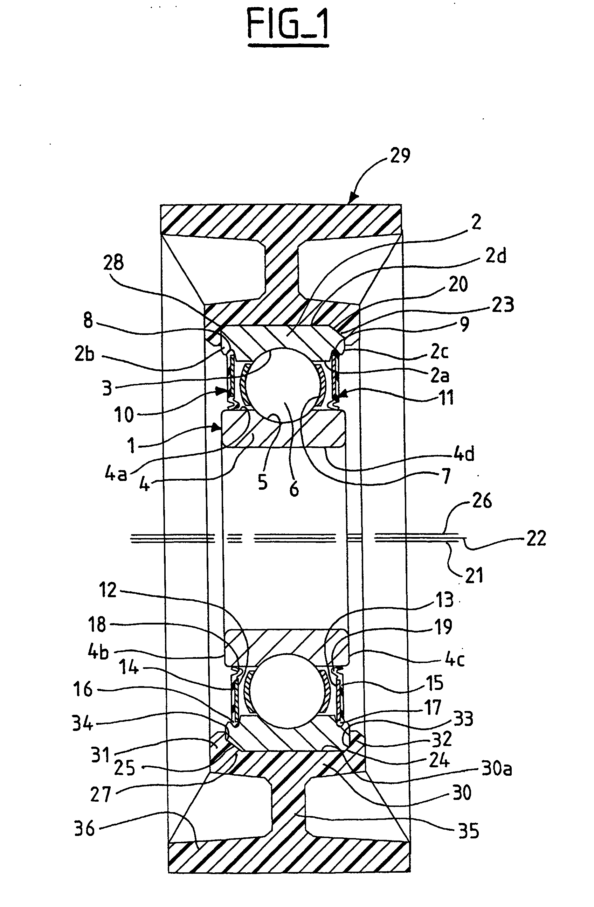

Sur les figures 1 à 3, un roulement 1 comprend une bague extérieure 2 tournante pourvue sur son alésage 2a d'un chemin de roulement torique 3, une bague intérieure non tournante 4 pourvue sur sa surface extérieure 4a d'un chemin de roulement torique 5, et une rangée d'éléments roulants 6, ici des billes, disposés entre le chemin de roulement 3 de la bague extérieure 2 et le chemin de roulement 5 de la bague intérieure 4. Les éléments roulants 6 sont maintenus à espacement circonférentiel régulier par une cage 7. On pourrait utiliser, à la place de billes, des rouleaux ou des aiguilles. Les bagues intérieure 4 et extérieure 2, massives, ont été obtenues par usinage conventionnel avec enlèvement de matière.

La bague extérieure 2 est également pourvue de deux faces latérales radiales 2b, 2c opposées, et d'une surface extérieure cylindrique 2d. Deux rainures 8 et 9 symétriques par rapport au plan radial passant par le centre des éléments roulants 6, sont formées dans l'alésage 2a de la bague extérieure 2, la rainure 8 étant adjacente à la face latérale 2b, la rainure 9 étant adjacente à la face latérale 2c.

La bague intérieure 4 est également pourvue de deux faces latérales radiales 4b, 4c opposées, respectivement dans le même plan radial que les surfaces latérales 2b et 2c, et d'un alésage 4d.

Des organes d'étanchéité référencés 10, 11 identiques sont fixés sur la bague extérieure 2. Les organes d'étanchéité 10, 11 comprennent des armatures métalliques 12, 13 en forme générale de disque sur lesquelles sont surmoulées des parties élastiques 14, 15 réalisées en élastomère par exemple. Les parties élastiques 14, 15 sont annulaires et comprennent à leur extrémité de plus grand diamètre un bourrelet 16, 17. Le bourrelet 16 de l'organe d'étanchéité 10 est monté à force dans la rainure 8 de la bague extérieure 2. Le bourrelet 17 de l'organe d'étanchéité 11 est monté à force dans la rainure 8 de la bague extérieure 2. Chaque partie élastique 14, 15 comprend à son extrémité de petit diamètre une lèvre d'étanchéité 18, 19 en contact de frottement sur la surface extérieure 4a de la bague intérieure 4. Les organes d'étanchéité 10, 11 sont du type standard dans les roulements, et garantissent l'étanchéité à l'encontre de la pollution extérieure et des fuites du lubrifiant, huile ou graisse, disposé à l'intérieur du roulement 1.

Un chanfrein 20 est formé entre la surface extérieure 2d de la bague extérieure 2 et la face latérale 2c de la bague extérieure 2. Le chanfrein est formé selon une surface de révolution d'axe 21 parallèle à l'axe 22 du roulement 1, et compris dans le plan de la figure 1. Le second axe de révolution 21 est décalé par rapport au premier axe de révolution 22 d'une distance comprise en 5% et 15% du diamètre extérieur de la bague extérieure 2. Le chanfrein 20 possède une largeur radiale variant continûment entre une zone 23 de plus grande largeur, radialement opposée au second axe 21 par rapport à l'axe 22, et une zone de moindre largeur 24 diamétralement opposée à la zone de plus grande largeur 23.

Bien entendu, si le second axe 21 est plus décalé par rapport au premier axe 22, et selon la forme du chanfrein, le chanfrein peut n'être formé que sur un secteur angulaire déterminé de la surface latérale radiale 2c.

Un chanfrein 25 de profil identique à celui du chanfrein 20 est formé entre la surface extérieure 2d de la bague extérieure 2 et la face latérale 2b axialement opposée à la face latérale 2c. Le chanfrein 25 est formé selon une surface de révolution d'axe 26 parallèle au premier axe 22, disposé dans le même plan que les premier et second axes 21 et 22, en étant symétrique à l'axe 21 par rapport à l'axe 22. On obtient un chanfrein 25 possédant une portion de plus grande largeur radiale 27 axialement opposée à la portion de moindre largeur 24 du chanfrein 20, et une portion de moindre largeur 28 axialement opposée à la portion de plus grande largeur 23 du chanfrein 20.

On note que les chanfreins 20, 25 sont symétriques par rapport au point appartenant au plan radial passant par le centre des éléments roulants 6 et au premier axe 22.

Un galet 29 comprend une portion axiale 30 possédant un alésage 30a en contact et en concordance de forme avec la surface extérieure 2d de la bague extérieure 2. Des bourrelets 31 et 32 s'étendent radialement vers l'intérieur à partir des extrémités axiales opposées de la portion axiale 30, en venant en contact respectivement avec les faces latérales 2b et 2c de la bague extérieure 2. Le galet 29 comprend une surface de révolution 33 s'étendant obliquement entre l'alésage 30a de la portion axiale 30 et le bourrelet 32, en possédant une forme concordante au chanfrein 20. Le galet 29 possède une surface de révolution 34 s'étendant obliquement entre l'alésage de la portion axiale 30 et le bourrelet 31, et de forme concordante avec le chanfrein 25 de la bague extérieure 2. Une portion radiale 35 s'étend vers l'extérieur à partir de la portion axiale 30, dans le plan radial passant par le centre des éléments roulants 6. Une enveloppe 36 s'étend axialement de chaque côté de façon symétrique à partir de la zone de plus grand diamètre de la paroi radiale 35.

Le galet 29 peut être obtenu par exemple par surmoulage d'une matière synthétique sur la bague extérieure 2. Ce procédé de fabrication est rapide et permet d'obtenir facilement les surfaces de révolution 33, 34 de formes concordantes avec les chanfreins 20, 25.

Les bourrelets 31, 32 permettent de solidariser axialement le galet 29 avec la bague extérieure 2. Les surfaces de révolution 33, 34 de forme concordante avec respectivement les chanfreins 20, 25, permettent d'immobiliser angulairement le galet 29 par rapport à la bague extérieure 2. En effet, la rotation de la bague extérieure 2 relativement au galet 29 est empêchée par effet de coincement provoqué par le contact entre le chanfrein 20 et la surface de révolution 33 qui possède un axe de révolution différent de l'axe de révolution de la surface 2d et de l'alésage 30a en contact mutuel. Le chanfrein 25 coopère de la même façon avec la surface de révolution 34.

Un seul chanfrein 20 excentré suffit à l'immobilisation angulaire du galet 29 et de la bague extérieure 2. Cependant, la formation d'un seul chanfrein 20 excentré crée un balourd pouvant provoquer des vibrations lors de la rotation de la bague extérieure 2.

La bague extérieure 2, comprenant deux chanfreins 20, 25 excentrés symétriques est équilibrée radialement et ne possède pas de balourd. La bague extérieure 2 n'est pas tout à fait axialement symétrique, mais possède une longueur axiale réduite, de sorte qu'une telle dissymétrie est sans conséquence sur le plan des phénomènes vibratoires ou oscillatoires.

Les chanfreins 20, 25 sont formés de manière connue en soi par usinage. La formation de chanfreins 20, 25 excentrés permet d'obtenir un moyen d'immobilisation angulaire sans usinage supplémentaire de la bague extérieure 2, par rapport à une bague standard. Il s'agit d'un usinage légèrement différent, mais du même type.

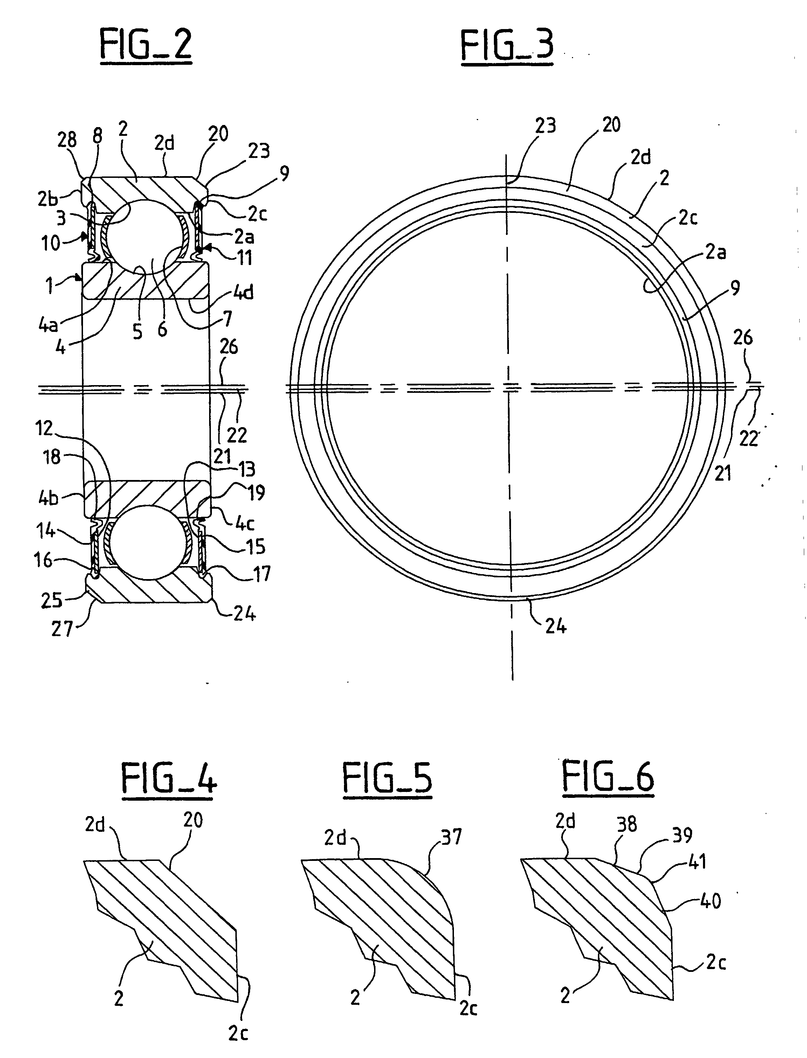

Sur la figure 4 est représenté un chanfrein 20 de forme générale tronconique et de profil rectiligne, s'étendant obliquement entre la surface extérieure 2d de la bague extérieure 2 et la surface latérale radiale 2c.

La figure 5 illustre un mode de réalisation différent. Un chanfrein 37 est de profil curviligne, en étant d'une part tangent à la surface extérieure 2d de la bague extérieure 2, et d'autre part tangent à la surface latérale radiale 2c de la bague extérieure 2.

Sur la figure 6, un chanfrein 38 comprend deux surfaces tronconiques de révolution 39, 40 selon un même axe. La surface 39 s'étend obliquement, radialement vers l'intérieur depuis la surface extérieure 2d vers la face 2c. La surface 40 s'étend obliquement, radialement vers l'extérieur depuis la face latérales 2c, vers la surface extérieure 2d. Les surfaces 39 et 40 se rejoignent en formant une nervure 41 de profil curviligne, tangente d'un côté à la surface 39, et de l'autre côté à la surface 40.

Bien entendu, d'autres types de profils de chanfreins conviennent parfaitement. On adapte le profil pour obtenir une solidarisation angulaire du galet 29 et de la bague extérieure 2, tout en permettant une bonne répartition des efforts.

En variante, on pourrait réaliser deux chanfreins s'étendant entre la surface extérieure 2d de la bague extérieure 2 et la face latérale 2c de la bague extérieure 2 formés selon deux surfaces de révolution d'axes de révolution 21, 26, de façon que l'on obtienne deux chanfreins excentrés décalés de 180°, du même côté de la bague extérieure 2 qui sera alors de symétrie axiale. La bague extérieure 2 est non seulement dépourvue de balourd, mais aussi équilibrée axialement.

L'invention appliquée à un roulement ne se limite pas à une bague extérieure tournante et une bague intérieure non tournante. L'invention peut être adaptée facilement à un roulement dans lequel la bague intérieure est tournante, et la bague extérieure non tournante.

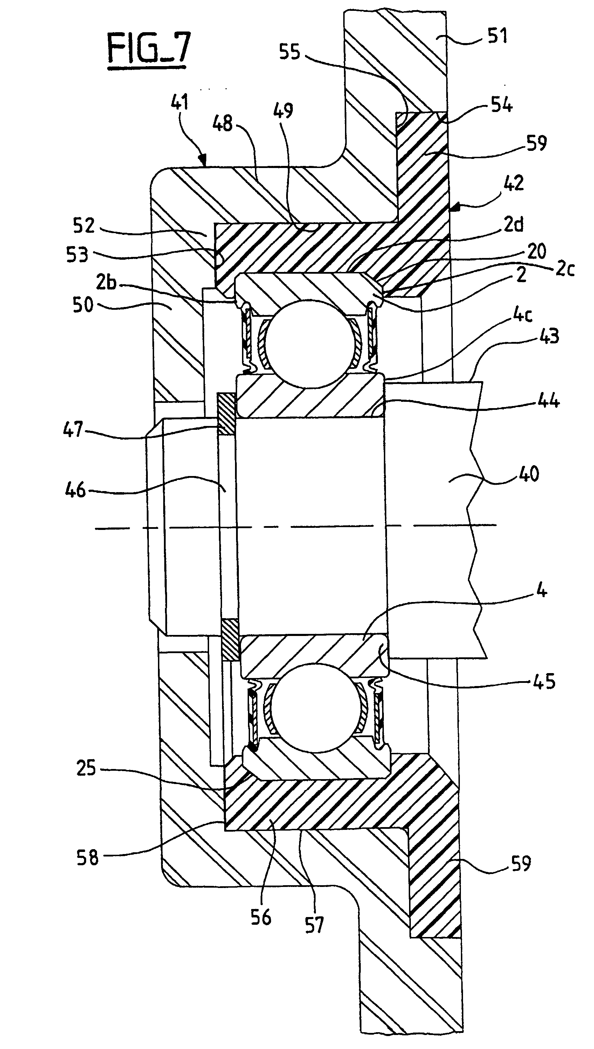

Sur la figure 7, où les références aux éléments semblables à ceux de la figure 1 ont été reprises, un arbre 40 est monté sur un support 41 par l'intermédiaire d'un roulement 1 comprenant une bague extérieure non tournante 2 et une bague intérieure tournante 4, et d'un élément d'interface 42 disposé entre la bague extérieure 2 et le support 41.

La bague extérieure 2 présente une surface extérieure cylindrique 2d prolongée à ses extrémités par des chanfreins 20, 25 possédant comme génératices des surfaces de révolution d'axes de révolution décalés par rapport à un axe de la surface extérieure cylindrique 2d.

L'arbre 40 comprend une surface extérieure cylindrique 43 et, à une extrémité, une portée cylindrique 44 présentant un diamètre inférieur au diamètre de la surface extérieure de l'arbre 40. Un épaulement radial 45 s'étend entre la surface extérieure 43 et la portée 44. La portée 44 est munie à proximité de l'extrémité de l'arbre 40 d'une gorge annulaire 46 à section rectangulaire.

La bague intérieure 4 du roulement 1 est ajustée avec un serrage adéquat sur la portée cylindrique 44, en étant en contact par une face latérale 4c avec l'épaulement radial 45. Un anneau élastique 47, du type circlips, est disposé dans la gorge annulaire 46, en étant situé du côté de la bague intérieure 4 opposé à l'épaulement 45. L'anneau élastique 47 empêche un mouvement axial de la bague intérieure 4 dans une direction opposée à l'épaulement 45.

Le support 41 comprend une partie cylindrique 48 présentant un alésage 49, une portion radiale 50 s'étendant vers l'intérieur à partir d'une extrémité axiale de la partie cylindrique 48, en étant pourvue d'une ouverture centrale, et un flasque 51 s'étendant radialement vers l'extérieur à partir d'une extrémité axiale de la partie cylindrique opposée à la portion radiale 50.

La portion radiale 50 comprend dans sa zone de plus grand diamètre une surépaisseur axiale 52 en saillie du côté de la partie cylindrique 48, et présentant une surface radiale d'appui 53.

Un dégagement annulaire est formé dans le support 41 à l'extrémité de l'alésage 49 de la partie cylindrique 48 opposée à la portion radiale 50, et présente un diamètre intérieur supérieur au diamètre de l'alésage 49. Le dégagement annulaire est ménagé en partie dans la partie cylindrique 48 et en partie dans le flasque 51. Le dégagement annulaire comprend une surface intérieure cylindrique 54 et une surface radiale 55 s'étendant entre la surface intérieure cylindrique 54 et l'alésage 49 de la partie cylindrique 48.

L'élément d'interface 42 comprend un manchon 56 de forme générale tubulaire, présentant une surface extérieure 57 et à une extrémité axiale une surface radiale 58, et une collerette 59 s'étendant radialement vers l'extérieur à partir d'une extrémité du manchon 56 opposée à la surface radiale 58.

Le manchon 56 est surmoulé sur la bague extérieure 2 de façon à venir épouser parfaitement la surface extérieure cylindrique 2d, les chanfreins 20, 25 et en partie les faces latérales 2b, 2d de la bague extérieure 2 du roulement.

Le manchon 56 est ajusté dans l'alésage 49 de la partie cylindrique 48, la surface radiale 58 d'extrémité libre du manchon 56 venant en appui axial sur la sa surface radiale 53 de la surépaisseur axiale 52 de la portion radiale 50 du support 41. Le manchon 56 est en appui axial contre le support 41 du côté du roulement 1 opposé à l'épaulement 45 de l'arbre 40. Ainsi, le roulement 1 est maintenu axialement entre la surface radiale 53 de la portion radiale 52 du support 41 et l'épaulement 45 de l'arbre 40.

La collerette 59 de l'élément d'interface 42 est logée dans le dégagement annulaire du support 41 en étant ajustée sur la surface intérieure cylindrique 54, et en venant en contact avec la surface radiale 55 du dégagement annulaire. La collerette 59 affleure du côté opposé une surface du support 41. L'extrémité de l'arbre 40 vient en partie en saillie dans l'ouverture centrale de la portion radiale 50 du support 41.

La bague extérieure 2 et le manchon 56 sont en contact principalement par des surfaces de révolution, tout en étant solidaire angulairement grâce à la présence des chanfreins désaxés qui empêchent une rotation relative de la bague extérieure 2 par rapport au manchon 56 par effet de coincement, comme cela a été décrit précédemment.

Le manchon 56 est situé sensiblement radialement entre le support 41 et la bague extérieure 2, en formant une interface. Le manchon 56 est monté avec un serrage. Ainsi, en cas de variations dimensionnelles entre le support 41 et la bague extérieure 2, le manchon 56 pourra compenser ces variations, pour conserver un maintien convenable de la bague extérieure 2. De telles variations dimensionnelles peuvent apparaître suite à un échauffement de l'ensemble. Un tel échauffement peut se produire dans un moteur électrique, dont un carter comprendrait le support 41 et un rotor l'arbre 40. Le manchon 56 est monté avec un serrage suffisant pour assurer un maintien angulaire entre la bague extérieure 2 et le support 41.

De préférence, on utilise un manchon d'interface 56 obtenu dans un matériau présentant une rigidité adaptée pour que des déformations radiales provoquées lors du montage entre le support 41, le manchon 56 et la bague extérieure 2 soient concentrées dans le manchon 56, afin que ce dernier compense les variations dimensionnelles. Par exemple, on utilise un manchon 56 en matériau moins rigide que le matériau employé pour le support 41 et pour la bague extérieure 2.

En outre, le manchon 56 formant interface permet encore d'absorber des vibrations qui pourraient être transmises entre le roulement 1 et le support 41.

Dans une variante, pour améliorer un maintien angulaire du manchon 56 par rapport au support 41, on peut prévoir, en complément ou en remplacement de la collerette 59, un ou plusieurs ergots espacés circonférentiellement et venant en saillie dans des encoches correspondantes ménagées dans le support 41.

Dans une autre variante, on peut prévoir de remplacer la collerette par une base de forme quelconque permettant une immobilisation angulaire en coopération avec un logement de forme concordante.

On a décrit des pièces de forme générale de révolution. Bien entendu, l'invention s'applique aussi bien à des pièces quelconques, prévues pour un contact avec une autre pièce par une surface de révolution, avec une immobilisation angulaire.

Grâce à l'invention, une pièce prévue pour un contact avec une seconde pièce par une surface de révolution, est munie de moyens d'immobilisation angulaire entre la pièce et une seconde pièce, sans nécessiter d'opération supplémentaire d'usinage. Dans le cas d'une pièce de forme générale de révolution, et notamment une pièce prévue pour un mouvement de rotation rapide, on obtient facilement une pièce équilibrée, dépourvue de balourd.

## Revendications

1. Pièce (2) comprenant une surface de révolution (2d) selon un premier axe (22), la surface de révolution (2d) étant prolongée à une extrémité axiale par un chanfrein (20), **caractérisé par le fait que** le chanfrein (20) possède une génératrice formée par une surface de révolution selon un second axe (21) différent du premier axe (22), pour former un moyen d'immobilisation angulaire lorsque ladite pièce est en contact avec une autre pièce par ladite surface de révolution (2d) et par ledit chanfrein (20).

2. Pièce selon la revendication 1, **caractérisé par le fait que** le second axe (21) est parallèle au premier axe (22).

3. Pièce selon la revendication 1 ou 2, **caractérisé par le fait qu'**elle comprend un second chanfrein (25) possédant une génératrice formée par une surface de révolution selon un troisième axe (26) de révolution différent des premier et second axes (21, 22).

4. Pièce selon la revendication 3, **caractérisé par le fait que** les second et troisième axes (21, 26) sont symétriques par rapport au premier axe (22).

5. Pièce selon la revendication 3 ou 4, **caractérisé par le fait que** le premier chanfrein prolonge la surface de révolution (2d) à partir d'une extrémité axiale de la surface de révolution (2d), le second chanfrein (25) prolongeant la surface de révolution (2d) à partir de l'extrémité axiale opposée.

6. Pièce selon l'une quelconque des revendications 3 ou 4, **caractérisé** le premier chanfrein prolonge la surface de révolution (2d) à partir d'une première extrémité axiale, et le second chanfrein (25) prolonge la surface de révolution (2d) à partir de la même extrémité axiale.

7. Pièce selon l'une quelconque des revendications 3 à 6, **caractérisé par le fait que** les premier et second chanfreins (20, 25) sont symétriques par rapport à un point du premier axe.

8. Pièce selon l'une quelconque des revendications précédentes, **caractérisé par le fait qu'**un chanfrein (20) possède un profil en partie rectiligne et/ou en partie curviligne.

9. Ensemble mécanique **caractérisé par le fait qu'**il comprend une première pièce (2) comprenant une surface de révolution (2d) selon un premier axe (22), prolongée à une extrémité axiale par un chanfrein (20) possédant une génératrice formée par une surface de révolution selon un second axe (21) différent du premier axe (22), et une seconde pièce en contact avec la première pièce par l'intermédiaire de ladite surface de révolution (2d) et dudit chanfrein (20).

10. Ensemble mécanique selon la revendication 9, **caractérisé par le fait qu'**il comprend une bague tournante (2) formant la première pièce, un galet annulaire disposé sur la bague tournante (2) formant la seconde pièce.

11. Ensemble mécanique selon la revendication 9, **caractérisé par le fait qu'**il comprend une bague non tournante (2) formant la première pièce, une bague tournante (4), au moins une rangée d'éléments roulants (6) disposés entre des chemins de roulement des bagues tournante et non tournante (4, 2), et un manchon d'interface formant la seconde pièce et prévu pour être disposé radialement entre la bague tournante et un support en formant une interface.

## Patentansprüche

1. Teil (2) mit einer Rotationsfläche (2d) entsprechend einer ersten Achse (22), wobei die Rotationsfläche (2d) an einem Ende in Achsenrichtung sich in einer Fase (20) fortsetzt, **dadurch gekennzeichnet, dass** die Fase (20) eine Erzeugende hat, die durch eine Rotationsfläche entsprechend einer zweiten, sich von der ersten Achse (22) unterscheidenden Achse (21) gebildet wird, um ein Mittel zum Festsetzen in Winkelrichtung zu bilden, wenn das genannte Teil an der genannten Rotationsfläche (2d) und an der genannten Fase (20) mit einem anderen Teil in Berührung steht.

2. Teil nach Patentanspruch 1, **dadurch gekennzeichnet, dass** die zweite Achse (21) zur ersten Achse (22) parallel verläuft.

3. Teil nach Patentanspruch 1 oder 2, **dadurch gekennzeichnet, dass** es eine zweite Fase (25) aufweist, die eine Erzeugende hat, die durch eine Rotationsfläche entsprechend einer dritten, sich von der ersten und der zweiten Achse (22, 21) unterscheidenden Achse (26) gebildet wird.

4. Teil nach Patentanspruch 3, **dadurch gekennzeichnet, dass** die zweite und die dritte Achse (21, 26) relativ zur ersten Achse (22) symmetrisch sind.

5. Teil nach Patentanspruch 3 oder 4, **dadurch gekennzeichnet, dass** die erste Fase die Rotationsfläche (2d) von einem Ende in Achsenrichtung der Rotationsfläche (2d) aus fortsetzt, während die zweite Fase (25) die Rotationsfläche (2d) vom entgegengesetzten Ende in Achsenrichtung aus fortsetzt.

6. Teil nach irgendeinem der Patentansprüche 3 oder 4, **dadurch gekennzeichnet, dass** die erste Fase die Rotationsfläche (2d) von einem Ende in Achsenrichtung aus fortsetzt, und die zweite Fase (25) die Rotationsfläche (2d) vom selben Ende in Achsenrichtung aus fortsetzt.

7. Teil nach irgendeinem der Patentansprüche 3 bis 6, **dadurch gekennzeichnet, dass** die erste und die zweite Fase (20, 25) relativ zu einem Punkt der ersten Achse symmetrisch sind.

8. Teil nach irgendeinem der vorangehenden Patentansprüche, **dadurch gekennzeichnet, dass** eine Fase (20) ein teilweise geradliniges und/oder teilweise kurvenförmiges Profil aufweist.

9. Mechanische Anordnung, **dadurch gekennzeichnet, dass** sie aus einem ersten Teil (2) besteht, eine Rotationsfläche (2d) entsprechend einer ersten Achse (22) aufweisend, die sich an einem Ende in Achsenrichtung in einer Fase (20) fortsetzt, die eine Erzeugende hat, die durch eine Rotationsfläche entsprechend einer zweiten, sich von der ersten Achse (22) unterscheidenden Achse (21) gebildet wird, und einem zweiten Teil, das über die genannte Rotationsfläche (2d) und über die genannte Fase (20) mit dem ersten Teil in Berührung steht.

10. Mechanische Anordnung nach Patentanspruch 9, **dadurch gekennzeichnet, dass** sie einen rotierenden Ring (2) aufweist, der das erste Teil bildet, während eine ringförmige, auf dem rotierenden Ring (2) angeordnete Rolle das zweite Teil bildet.

11. Mechanische Anordnung nach Patentanspruch 9, **dadurch gekennzeichnet, dass** sie einen nicht rotierenden Ring (2) aufweist, der das erste Teil bildet, einen rotierenden Ring (4), mindestens eine Reihe rollender Teile (6), die zwischen Laufwegen des rotierenden und des nicht rotierenden Ringes (4, 2) angeordnet sind, und eine Zwischenstückhülse, die das zweite Teil bildet und dafür vorgesehen ist, radial zwischen dem rotierenden Ring und einem Halter als Zwischenstück angeordnet zu werden.

## Claims

1. Component (2) comprising a surface of revolution (2d) about a first axis (22), the surface of revolution (2d) being extended at one axial end by a chamfer (20),
**characterized in that** the chamfer (20) has a generatrice formed by a surface of revolution about a second axis (21) different from the first axis (22) to form a means of angular immobilization when the said component is in contact with another component via the said surface of revolution (2d) and via the said chamfer (20).

2. Component according to Claim 1, **characterized in that** the second axis (21) is parallel to the first axis (22).

3. Component according to Claim 1 or 2, **characterized in that** it comprises a second chamfer (25) having a generatrix formed by a surface of revolution about a third axis (26) of revolution different from the first and second axes (21, 22).

4. Component according to Claim 3, **characterized in that** the second and third axes (21, 26) are symmetric about the first axis (22).

5. Component according to Claim 3 or 4, **characterized in that** the first chamfer extends the surface of revolution (2d) from one axial end of the surface of revolution (2d), the second chamfer (25) extending the surface of revolution (2d) from the opposite axial end.

6. Component according to either one of Claims 3 and 4, **characterized in that** the first chamfer extends the surface of revolution (2d) from a first axial end, and the second chamfer (25) extends the surface of revolution (2d) from the same axial end.

7. Component according to any one of Claims 3 to 6, **characterized in that** the first and second chamfers (20, 25) are symmetric about a point on the first axis.

8. Component according to any one of the preceding claims, **characterized in that** a chamfer (20) has a profile partly straight and/or partly curved.

9. Mechanical device, **characterized in that** it comprises a first component (2) comprising a surface of revolution (2d) about a first axis (22), extended at one axial end by a chamfer (20) having a generatrix formed by a surface of revolution about a second axis (21) different from the first axis (22), and a second component in contact with the first component via the said surface of revolution (2d) and the said chamfer (20).

10. Mechanical device according to Claim 9, **characterized in that** it comprises a rotating race (2) forming the first component, an annular roller arranged on the rotating race (2) forming the second component.

11. Mechanical device according to Claim 9, **characterized in that** it comprises a non-rotating race (2) forming the first component, a rotating race (4), at least one row of rolling elements (6) arranged between raceways of the rotating and non-rotating races (4, 2) and an interface sleeve forming the second component and designed to be arranged radially between the rotating race and a support, thereby forming an interface.
